# EUROPÄISCHE PATENTANMELDUNG

(11) **EP 0 542 048 A1**
(43) Veröffentlichungstag der Anmeldung: **19.05.1993**
(21) Anmeldenummer: 92118480.0
(22) Anmeldetag: 29.10.1992
(51) Int. Cl.: H04M 11/00, G08B 3/10

(54) **Bett-Bediengerät mit zusätzlichen Funktionen**

(30) Priorität: 28.05.1992 DE 4217648; 13.11.1991 DE 4137225
(71) Anmelder: ROBERT BOSCH GMBH, 70442 Stuttgart (DE)
(72) Erfinder: Drehsen, Axel, W-5168 Nideggen (DE); Trappe, Horst, W-5000 Köln 71 (DE); Döbold, Herbert, W-5000 Köln 71 (DE); Franke, Klaus, Dipl.-Ing., W-5042Erfstadt 12 (DE)

(57) **Zusammenfassung**

Das Bett-Bediengerät (BG) weist einen Fernsprechapparat (F) in Form eines Handapparates mit integrierter Wähltastatur auf, welcher in einer Halterung (HA) gehalten wird. Neben einer Schwesternruftaste (SR) und einer dazugehörigen Beruhigungslampe (BL) sind Bedienungs- und Anzeigeelemente für die Benutzung eines Fernsehgeräts vorhanden. Die Benutzung des Fernsehgeräts bzw. des Fernsprechapparates (F) kann in Abhängigkeit von den Informationen erfolgen, die auf einer Karte (K), beispielsweise Chip-Karte eingespeichert sind, wobei das Bett-Bediengerät (BG) mit einem entsprechenden Kartenleser ausgestattet ist.

## Beschreibung

Die Erfindung betrifft ein Bett-Bediengerät für Ruf- und Sprechanlagen in Krankenhäusern und Pflegeheimen, mit einer an einer Schwesternrufanlage angeschlossenenen Ruftaste, mit einer Einrichtung zur Lautstärkeeinstellung eines Kopfhörers, mit einer Tonleitungsauswahleinrichtung, durch welche die Anschaltung jeweils einer von einer Vielzahl von Tonleitungen an den an dem Bett-Bediengerät angeschlossenen Kopfhörer steuerbar ist, das Bett-Bediengerät an einem, an einem Tisch befestigten schwenkbaren starren Bügel angebracht ist, eine Halterung für einen, an dem Bett-Bediengerät angeschlossenen Fernsprechapparat in Form eines Handapparates mit eingebauter Wähltastatur vorgesehen ist, und über die Tonleitungsauswahleinrichtung der Kopfhörer mit einer Fernsteuereinrichtung verbindbar ist, welche den Kopfhörerausgang eines im Raum des Bett-Bediengeräts befindlichen Fernsehgeräts aufgrund von Steuerbefehlen durchschaltet, die in der mit einer zentralen Erfassungs- und Steuereinrichtung verbundenen oder verbindbaren Fernsteuereinrichtung auslösbar sind.

Ein derartiges Bett-Bediengerät ist bereits bekannt und wird in der DE-PS 38 26 083 beschrieben. Dabei wird davon ausgegangen, daß die Fernsteuerung des im Raum des Bett-Bediengeräts befindlichen Fernsehgeräts vom Benutzer über die Wähltastatur des am Bett-Bediengeräts angeschlossenen Fernsprechapparates erfolgt. Die Überprüfung der Berechtigung wird an zentraler Stelle durchgeführt, und zwar in Abhängigkeit von einem anschlußindividuellen Guthaben, wie dies beispielsweise in der DE-PS 34 38 293 beschrieben ist. Da der Zugriff zum Fernsprechapparat nicht besonders gesichert ist, besteht auch die Möglichkeit der mißbräuchlichen Benutzung des Fernsehgeräts, wodurch dem Anschlußinhaber ein finanzieller Schaden entstehen kann, wenn die Benutzung des Fernsprechapparates oder des Fernsehgeräts kostenpflichtig ist.

Die Aufgabe der Erfindung besteht nun darin, das bekannte Bett-Bediengerät mit zusätzlichen Funktionen zu versehen, insbesondere die mißbräuchliche Benutzung des Fernsehgeräts oder auch des Fernsprechapparates zu verhindern.

Diese Aufgabe wird dadurch gelöst, daß das Bett-Bediengerät einen Kartenleser aufweist, welcher mit einer Steuereinrichtung in der Fernsteuereinrichtung verbunden ist, wobei in Abhängigkeit von den auf der in den Kartenleser eingeführten Karte eingespeicherten Informationen eine Freigabe der Benutzung des Fernsehgeräts oder des Fernsprechapparates erfolgt.

Hierdurch ist es möglich, durch die Verwendung einer personenbezogenen individuellen Karte oder auch einer Guthabenkarte, beispielsweise Chip-Karte, die Benutzung des Fernsehgeräts oder auch des Fernsprechapparates nur dann freizugeben, wenn die Karte der berechtigten Person in den Kartenleser eingeführt ist und/oder ein entsprechendes Guthaben vorhanden ist.

Vorteilhafte Weiterbildungen der Erfindung ergeben sich aus den Unteransprüchen.

Die Erfindung wird anhand eines Ausführungsbeispiels näher erläutert, welches in der Zeichnung dargestellt ist.

Es zeigt:
Fig. 1 die Vorderansicht des Bett-Bediengeräts,
Fig. 2 das Blockschaltbild des Bett-Bediengeräts
   und
Fig. 3 das Blockschaltbild der Fernsteuereinrichtung.

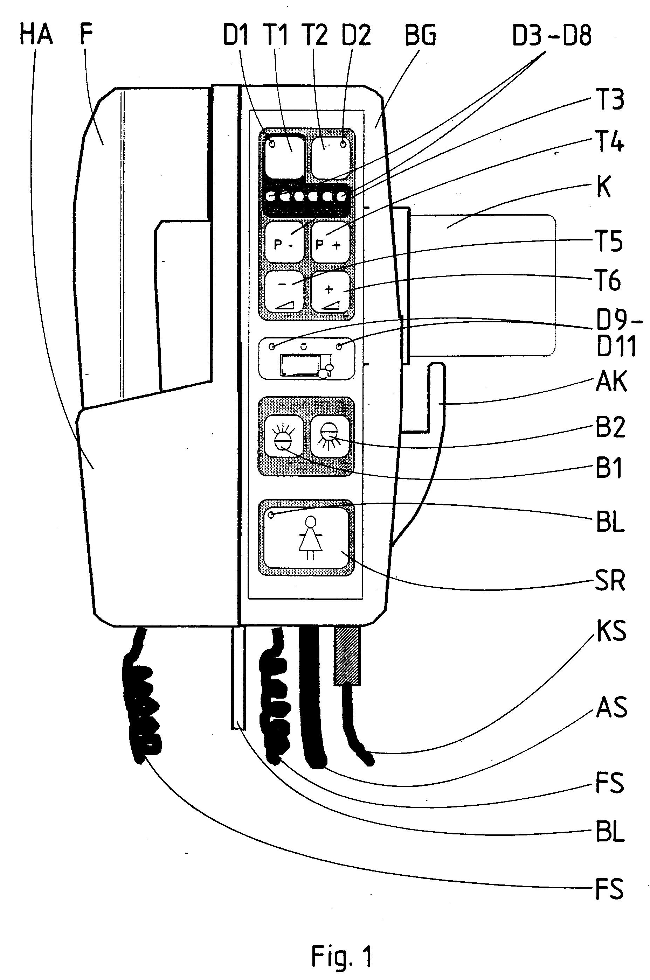

Das Bett-Bediengerät BG weist eine Halterung HA auf (Fig. 1), welche den Fernsprechapparat F aufnimmt, der aus einem Handapparat mit integrierter Wähltastatur besteht. Über die Anschlußschnur FS ist der Fernsprechapparat F mit dem Bett-Bediengerät BG verbunden. Seitlich am Gehäuse des Bett-Bediengeräts BG, und zwar auf der der Haltevorrichtung HA gegenüberliegendne Seite ist eine Aufhängevorrichtung AK für den nicht gezeigten Kopfhörer angebracht, welcher über die Anschlußschnur KS elektrisch mit dem Bett-Bediengerät BG verbunden ist. Das Gehäuse des Bett-Bediengeräts BG ist an einem schwenkbaren Bügel BL angebracht, wie dies in der DE-PS 38 26 083 gezeigt wird.

Oberhalb der Aufhängevorrichtung AK für den Kopfhörer ist der Aufnahmeschlitz des innerhalb des Gehäuses des Bett-Bediengeräts BG befindlichen Kartenlesers angebracht, in welchen eine Karte K eingeführt werden kann. Bei dieser Karte K handelt es sich um einen tragbaren Datenträger, beispielsweise um eine Chip-Karte, die auf einem Substrat entweder einen Speicher oder einen Mikroprozessor mit Speicher enthält, der über mehrere elektrische Kontaktflächen mit den Kontakten des Kartenlesers elektrisch verbindbar ist.

Die dem Benutzer zugewandte Seite des Gehäuses des Bett-Bediengeräts ist mit einer Vielzahl von Anzeige- und Bedienungseinrichtungen versehen. Die Taste T1 dient zur Einleitung einer Tonübertragung, wobei nach deren Betätigung die Anzeigevorrichtung D1 leuchtet. Durch die Betätigung der Taste T3 bzw. der Taste T4 läßt sich in Rückwärtsrichtung bzw. in Vorwärtsrichtung die Auswahl einer von sechs Tonleitungen steuern, wobei die jeweils angeschaltete Tonleitung durch die betreffende Anzeigevorrichtung D3 bis D8 gekennzeichnet wird.

Zur Steuerung der Lautstärke dienen die Tasten T5 und T6, wobei durch Betätigung der Taste T5 die Lautstärke vermindert und durch Betätigung der Taste T6 die Lautstärke erhöht werden kann.

Wird die Benutzung des Fernsehgeräts gewünscht, so ist die Taste T2 zu betätigen, worauf die Anzeigevorrichtung D2 zu leuchten beginnt. Die Programmauswahl erfolgt wiederum über die Tasten T3 bzw. T4 und die Lautstärkeeinstellung wiederum durch Betätigung der Tasten T5 bzw. T6. Im Falle der Programmauswahl bei dem Fernsehgerät kann auf eine optische Kennzeichnung des ausgewählten Kanals am Bett-Bediengerät verzichtet werden, da diese am Fernsehgerät selbst erfolgt.

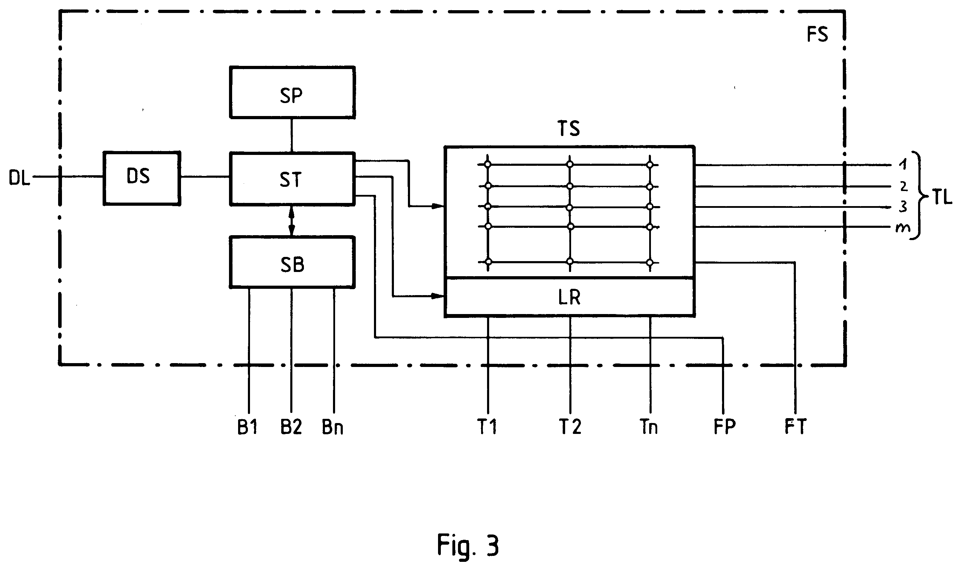

Die Anzeigevorrichtungen D9 bis D11 geben dem Benutzer an, ob das Guthaben noch in ausreichender Höhe zur Verfügung steht, ob es sich einer Mindestgrenze nähert, oder ob es aufgebraucht ist. Hierzu können beispielsweise die Farben grün und gelb und rot für die Anzeige herangezogen werden. Über die Taste B1 kann die Nachttisch-Beleuchtung und über die Taste B2 die Deckenbeleuchtung ein- und ausgeschaltet werden. Die Taste SR dient zum Ruf der Schwester, wobei die Anzeigevorrichtung BL als Beruhigungsanzeige dem Patienten signalisiert, daß sein Ruf erkannt worden ist. Eine weitere nicht gezeigte Anzeigevorrichtung kann zur Anzeige von Informationen dienen, die entweder auf der Karte selbst oder in der Fernsteuereinrichtung FS (Fig. 3) eingespeichert sind, dabei kann es sich z. B. um eine Bedienerführung handeln.

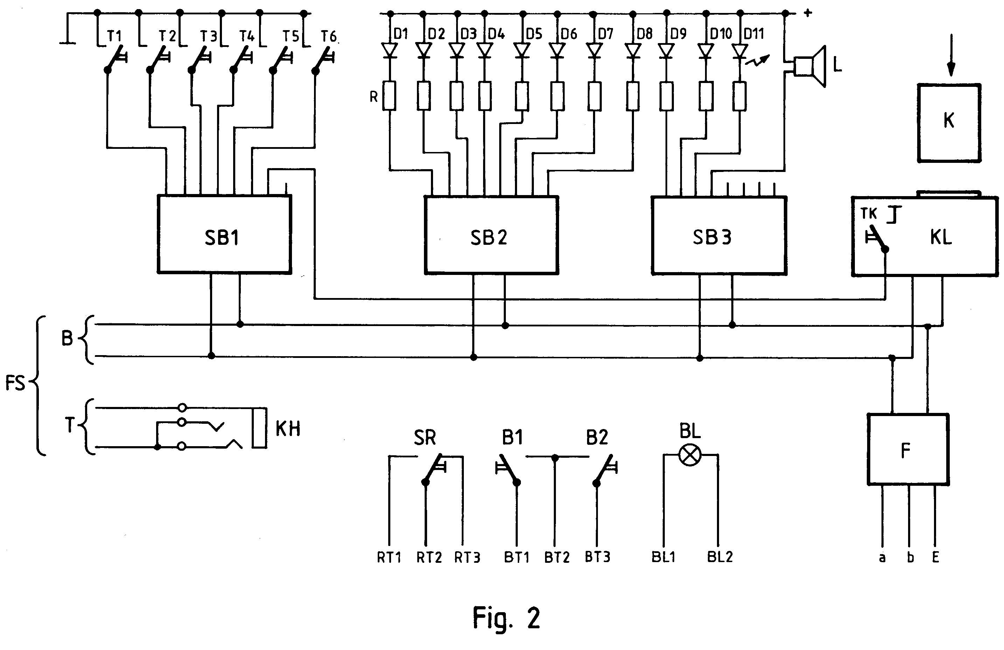

Das Blockschaltbild des Bett-Bediengeräts gemäß Fig. 2 zeigt die Schwesternruftaste SR als Umschaltkontakt mit den Anschlüssen RT1 bis RT3, die beiden Beleuchtungssteuerungstasten B1 und B2 mit den Anschlüssen BT1 bis BT3, die Beruhigungslampe BL mit den Anschlüssen BL1 und BL2 und den Fernsprechapparat F mit den Anschlüssen a, b und E der Anschlußschnur. Auf diese Einrichtungen wird im Rahmen der weiteren Beschreibung nicht weiter eingegangen.

Die Tasten T1 bis T6 und der Kontakt TK des Kartenlesers KL, welcher durch die eingeführte Karte K betätigt wird, sind an dem Schnittstellenbaustein SB1 angeschlossen. Die Anzeigevorrichtungen D1 bis D8 sind als Leuchtdioden ausgebildet und mit dem Schnittstellenbaustein SB2 verbunden, Während die Anzeigevorrichtungen D9 bis D11, die ebenfalls als Leuchtdioden ausgebildet sind, und der elektroakustische Wandler L mit dem Schnittstellenbaustein SB3 verbunden sind. Sämtliche Schnittstellenbausteine SB1, SB2 und SB3 und der Kartenleser KL weisen einheitliche Schnittstellen zur Verbindung mit einem Bus-System B auf, dabei kann es sich bei dem Bus-System B um den sogenannten I²C- Bus handeln.

An dem Bus-System B kann auch eine nicht gezeigte Steuereinrichtung angeschlossen sein, wobei diese die Schnittstelle zur Fernsteuereinrichtung FS bildet. Auf diese Weise kann z. B. durch entsprechende Programmierung der Steuereinrichtung eine äußere Schnittstellenanpassung des Bett-Bediengeräts BD vorgenommen werden.

Die Schnittstellenbausteine SB1 bis SB3 weisen jeweils acht Ein/Ausgänge auf, an denen Signale erfaßt bzw. Signale ausgesendet werden können. Da ein Schnittstellenbaustein SB auch einen Speicher enthält, kann ein Ausgang so lange mit einem Ausgangssignal beaufschlagt werden, bis dieses über das Bus-System B wieder aufgehoben wird. Die einzelnen Schnittstellenbausteine SB1 bis SB3 und der Kartenleser KL können über das Bus-System B adressiert werden und dabei Befehle aufnehmen bzw. Informationen abgeben. Der Kartenleser KL verbindet über seine nicht gezeigten Kontakte den Speicher bzw. Mikroprozessor der Karte K direkt mit dem Bus-System B.

Die Wirkungsweise der einzelnen Einrichtungen des Blockschaltbildes des Bett-Bediengeräts gemäß Fig. 2 wird weiter unten in Verbindung mit dem Blockschaltbild der Fernsteuereinrichtung FS gemäß Fig. 3 erläutert.

Die Fernsteuereinrichtung FS (Fig. 3) ist in jedem Patientenzimmer einmal vorhanden, an dieser können mehrere Bett-Bediengeräte BG (s. Fig. 1) angeschlossen werden. Die Fernsteuereinrichtung FS ist mit einer Steuereinrichtung ST versehen, welche mit einem Speicher SP verbunden ist. Über die Schnittstellenschaltung SB hat die Steuereinrichtung ST Zugriff zu den einzelnen Bus-Systemen B1 bis Bn, an welchen die Schnittstellenbausteine SB und der Kartenleser KL der einzelnen Bett-Bediengeräte angeschlossen ist. Über eine Datenschnittstelle DS wird die Verbindung zwischen der Steuereinrichtung ST der Fernsteuereinrichtung FS mit einer Datenleitung DL ermöglicht, dabei kann die Datenleitung DL derart ausgebildet sein, daß an dieser eine Vielzahl von Fernsteuereinrichtungen FS angeschlossen sind oder die Datenleitung DL mit einem digitalen Fernsprechapparat verbunden ist, wobei in beiden Fällen ein Datenaustausch zwischen einer zentralen Erfassungs- und Steuereinrichtung und den einzelnen Fernsteuereinrichtungen FS ermöglicht wird. Der Speicher SP enthält u. a. jeweils einen Speicherplatz, der einem Bett-Bediengerät BD zugeordnet und über die Adresse des Bett-Bediengeräts ansteuerbar ist. Er enthält z. B. Informationen über das Guthaben des Patienten, über die angeschaltete Tonleitung TL, über den ausgewählten Fernsehkanal, über die eingestellte Lautstärke, usw.

Weiterhin weist die Fernsteuereinrichtung FS einen Tonleitungsschalter TS auf, der aus einer matrixförmigen Anordnung von Schaltern besteht, durch welche Verbindungen zwischen den einzelnen Zeilen und Spalten der Matrix durchgeschaltet werden können. An den Zeilen sind Tonleitungen TL1 bis TLm angeschlossen, dabei handelt es sich um sechs Tonleitungen, wenn von dem Ausführungsbeispiel gemäß Fig. 1 ausgegangen wird. Als weitere Tonleitung ist der Tonausgang FT des Fernsehgeräts an einer Zeile des Tonleitungsschalters TS angeschlossen. Die Spalten des Tonleitungsschalters TS führen über Lautstärkeregler LR zu den Leitungen T1 bis Tn, an denen die Kontaktbuchse für den Kopfhörer KH der Bett-Bediengeräte angeschlossen ist (s. Fig. 2).

Die Steuereinrichtung ST der Fernsteuereinrichtung FS steuert die einzelnen Schalter des Tonleitungsschalters, d. h. die Verbindungen zwischen Zeilen und Spalten, die Lautstärkeregler LR und über die Leitung FP das nicht gezeigte Fernsehgerät, und zwar die Ein- und Ausschaltung und die Kanalauswahl.

Wird nun am Bett-Bediengerät die Taste T1 betätigt (Fig. 2), so gelangt die Information über die Tastenbetätigung über den Schnittstellenbaustein SB1 und über das Bussystem B zur Steuereinrichtung ST der Fernsteuereinrichtung FS. Im Speicher SP ist die Information von der zuletzt ausgewählten Tonleitung eingespeichert, mit Hilfe dieser Information wird die betreffende Tonleitung TL mit der Leitung T des betreffenden Bett-Bediengeräts verbunden, so daß diese über den Kopfhörer KH abgehört werden kann. Gleichzeitig sendet die Steuereinrichtung ST an den betreffenden Schnittstellenbaustein SB2 des betreffenden Bett-Bediengeräts eine entsprechende Information, so daß diejenige Leuchtdiode der Anzeigevorrichtung D3 bis D8 leuchtet, welche dem ausgewählten Kanal zugeordnet ist. Wird nun eine der Tasten T3 bzw. T4 betätigt, so wird deren Tastenbetätigung ebenfalls über das Bus-System B der Steuereinrichtung ST übermittelt, welche daraufhin die Verbindung des Kopfhörers des Bett-Bediengeräts mit der davorliegenden bzw. dahinterliegenden Tonleitung TL veranlaßt. In gleicher Weise erfolgt die Regelung der Lautstärke, indem entweder die Häufigkeit oder die Dauer einer Tastenbetätigung der Tasten T5 bzw. T6 in der Steuereinrichtung ST der Fernsteuereinrichtung FS registriert wird und in Abhängigkeit von diesen Informationen eine Erhöhung bzw. eine Verringerung der Lautstärke durch entsprechende Steuersignale der Steuereinrichtung ST in dem Lautstärkeregler LR erfolgt.

Im Falle der Betätigung der Taste T2, d. h., wenn das Fernsehgerät benutzt werden soll, wird zunächst in der Steuereinrichtung ST der Fernsteuereinrichtung FS geprüft, ob nicht bereits von einem anderen Bett-Bediengerät das Fernsehgerät eingeschaltet worden ist. In diesem Fall wird in der Steuereinrichtung ST die Betätigung der Programmfortschaltetasten T3 und T4 als wirkungslos gekennzeichnet, wenn dem Benutzer die Möglichkeit genommen werden soll, sich auf den bereits ausgewählten Fernsehkanal ebenfalls aufzuschalten. Je nachdem, ob die gleichzeitige Benutzung des im Patientenzimmer befindlichen Fernsehgeräts durch einen zweiten Patienten möglich sein soll oder nicht und ob diese Benutzung dann ebenfalls u. U. kostenpflichtig ist, können die Programmauswahltasten T3 und T4 auch insoweit freigegeben werden, daß eine Anschaltung an den gleichen Kanal möglich ist, worauf der Tonausgang FT des Fernsehgeräts über die Fernsteuereinrichtung FS, und zwar über den Tonschalter TS an den Kopfhörer eines weiteren Bett-Bediengeräts angeschaltet werden kann, und zwar evtl. in Abhängigkeit eines vorhandenen Guthabens, wie weiter unten noch näher erläutert. Mit Hilfe der Steuereinrichtung ST wird in jedem Fall dafür Sorge getragen, daß eine Kanalauswahl im Fernsehgerät immer nur von demjenigen Bett-Bediengerät gesteuert werden kann, bei welchem zuerst die Taste T2 zum Einschalten des Fernsehgeräts betätigt worden ist. Auch bei dieser Taste wird die Aktivschaltung durch die Anzeigevorrichtung D2 optisch angezeigt, wobei die Anzeige so lange aktiv ist, bis die Taste T2 erneut betätigt wird, worauf die Anzeige erlischt.

Wie bereits erwähnt, besteht nach Betätigung der Taste T2 und eingeschalteter Anzeige D2 die Möglichkeit, über die Taste T3 bzw. T4 die Programmauswahl am Fernsehgerät zu steuern, wobei am Fernsehgerät selbst der jeweils ausgewählte Kanal angezeigt wird. Sobald nun ein kostenpflichtiger Kanal ausgewählt wird, kann der Benutzer durch ein von der Steuereinrichtung ST ausgelöstes Signal am elektroakustischen Wandler L des Bett-Bediengeräts darauf aufmerksam gemacht werden, die Karte K in den Kartenleser KL einzuführen. Die Steuereinrichtung greift nun auf den auf der Karte K befindlichen Speicher zu und fragt dort bestimmte, eingespeicherte Informationen ab. Bei diesen Informationen kann es sich beispielsweise um Angaben darüber handeln, ob der Karteninhaber berechtigt ist, überhaupt das Fernsehgerät zu benutzen oder nicht, ob der Zugriff zu sämtlichen oder nur bestimmten Kanälen gestattet ist, ob ein ausreichendes Guthaben auf der Karte vorhanden ist (Guthabenkarte), usw. Weiterhin benötigt die Steuereinrichtung ST bei einer Berechtigungskarte Angaben über die Karte bzw. den Karteninhaber.

Mit Hilfe der Informationen über die Identität des Karteninhabers kann nun das Guthaben, über welches die entsprechenden Informationen entweder in der zentralen Erfassungs- und Steuereinrichtung oder parallel in dieser und in der Speicher SP der betreffenden Fernsteuereinrichtung FS abgelegt sind, die Benutzung des Fernsehgeräts derart freigegeben werden, daß die Steuereinrichtung ST einen entsprechenden Befehl an den Tonleitungsschalter TS sendet, den Tonausgang FT des Fernsehgeräts mit dem Kopfhörer KH des betreffenden Bediengeräts zu verbinden.

Die Zeitdauer der Benutzung des Fernsehgeräts wird von der Steuereinrichtung ST erfaßt und als Information zur Verminderung des Guthabenbetrages benutzt, wobei die Kosten für die Benutzung der einzelnen Kanäle unterschiedlich sein kann. Der Guthabenbetrag kann nun entweder in der zentralen Erfassungs- und Steuereinrichtung in regelmäßigen Abständen während der Dauer der Benutzung entsprechend verringert werden, es ist jedoch auch denkbar, wenn die Informationen über den Guthabenbetrag sowohl in der zentralen Erfassungs- und Steuereinrichtung als auch in der Fernsteuereinrichtung FS abgespeichert sind, den Guthabenbetrag nur in der betreffenden Fernsteuereinrichtung FS entsprechend zu vermindern und nach Beendigung der Benutzung des Fernsehgeräts den Guthabenbetrag in der zentralen Erfassungs- und Steuereinrichtung mit Hilfe des Guthabenbetrages in der Fernsteuereinrichtung FS entsprechend zu aktualisieren. Je nach Leistungsfähigkeit der Datenleitung DL hinsichtlich der zu übertragenden Datenmenge wird das eine oder das andere Verfahren gewählt werden. Die Verwaltung des Guthabenbetrages in der Fernsteuereinrichtung FS hat den Vorteil, daß der Benutzer jederzeit über die Höhe seines augenblicklichen Guthabens insoweit unterrichtet werden kann, daß mit Hilfe der Anzeigevorrichtungen D9 bis D11 ein ausreichendes Guthaben, ein nicht ausreichendes Guthaben bzw. kein Guthaben anzeigbar ist. Dabei kann die Anzeigevorrichtung, welche "kein Guthaben" signalisiert, auch zur Anzeige herangezogen werden, wenn gesperrte Kanäle ausgewählt werden.

Bei einer Guthabenkarte wird auf Veranlassung der Steuereinrichtung ST der Fernsteuereinrichtung FS in Abhängigkeit von der Benutzungsdauer der auf der Karte eingespeicherte Guthabenbetrag verringert, wobei ebenfalls über die Anzeigevorrichtungen D9 bis D11 der Benutzer über den augenblicklichen Betrag in der bereits beschriebenen Weise informiert werden kann.

Der Guthabenbetrag kann auch ziffernmäßig durch eine Anzeigevorrichtung, beispielsweise eine Flüssigkristallanzeige dargestellt werden, in diesem Fall ist die Anzeigevorrichtung mit einem entsprechenden Steuerbaustein zu verbinden, der ebenfalls am Bus-System B angeschlossen ist.

Neben dem beschriebenen Ausführungsbeispiel ist auch denkbar, die Auswahl von Tonleitungen und/oder Fernsehkanälen grundsätzlich von dem Vorhandensein einer Karte K im Kartenleser KL abhängig zu machen. In diesem Fall kann bei einer Betätigung der Tasten T1 bzw. T2 und bei fehlender Karte der Benutzer durch ein entsprechendes akustisches Signal des elektroakustischen Wandlers L, welches auf Veranlassung der Steuereinrichtung ST ausgesendet wird, aufmerksam gemacht werden.

Die Kanalauswahl am Fernsehgerät ist jedoch auch über die Wähltastatur des Fernsprechapparates F (Fig. 1) steuerbar, indem die durch eine entsprechende vorangestellte Ausscheidungsziffer gekennzeichnete Wahlinformation von der Fernsprechvermittlungsanlage an die zentrale Erfassungs- und Steuereinrichtung weitergegeben wird. Von hier gelangen die Informationen über die Datenleitung DL zur Fernsteuereinrichtung FS, wo in bereits beschriebener Weise die weiteren Vorgänge wie Steuerung des Fernsehgeräts, Tonanschaltung, usw., ablaufen. In diesem Fall kann die Taste T2 und die dazugehörige Anzeigevorrichtung D2 im Bett-Bediengerät (s. Fig. 1) entfallen.

Neben der Freigabe des Fernsehgeräts kann auch die Freigabe des am Bett-Bediengerät BD angeschlossenen Fernsprechapparates F über die Karte K erfolgen.

Für das Führen von Telefongesprächen mit dem am Bett-Bediengerät BD angeschlossenen Fernsprechapparat F ist ebenfalls das Vorhandensein einer Karte K im Kartenleser KL erforderlich. Als einfachste Lösung bietet sich an, in die eine Sprechader der Anschlußleitung des Fernsprechapparates F im Bett-Bediengerät BD ein Schaltmittel einzuschleifen, welches über einen Ausgang eines Schnittstellenbausteins SB auf Veranlassung der Steuereinrichtung ST der Fernsteuereinrichtung FS steuerbar ist. Das Schaltmittel kann auf Veranlassung der Steuereinrichtung ST geöffnet werden, wenn entweder kein ausreichende Guthaben vorhanden ist oder die Benutzung des Fernsprechapparates F aufgrund einer entsprechenden Information in der Karte K oder in der Fernsteuereinrichtung FS oder in der zentralen Erfassungs- und Steuereinrichtung untersagt ist.

Es ist auch denkbar, am Bus-System B den Fernsprechapparat F anzuschließen, so daß von der Steuereinrichtung ST der Fernsteuereinrichtung FS Eingriffe derart in demselben vorgenommen werden können, daß die Benutzung desselben, z. B. für abgehende Gespräche gesperrt wird, wenn kein ausreichendes Guthaben vorhanden ist. Desgleichen ist über das Bus-System B eine Überprüfung der eingegebenen Wahlinformation möglich, so daß nur bestimmte Ziele freigegeben oder Auslandsgespräche unterbunden werden können. Die Tabelle über zu sperrenden oder freizugebenen Rufnummern kann auf der Karte K selbst, in der Fernsteuereinrichtung FS oder auch in der zentralen Erfassungs- und Steuereinrichtung abgelegt sein.

Soll nun die Möglichkeit bestehen, die Benutzung unterschiedlicher Gesprächsarten (Hausgespräch, Amtsgespräch, Ferngespräch, usw.) freizugeben oder zu unterbinden, so ist hierzu ein Datenaustausch zwischen der Fernsteuereinrichtung FS und der zentralen Erfassungs- und Steuereinrichtung bzw. zwischen dieser und der Fernsprechvermittlungsanlage notwendig, an welcher der Fernsprechapparat F angeschlossen ist. Dies gilt sowohl für die Berechtigungs- als auch für die Guthabenkarte. Ob im Falle des Aufbrauchs eines Guthabens während eines Gesprächs oder auch während der Benutzung des Fernsehgeräts die sofortige Unterbrechung der Fernsprechverbindung bzw. die Abschaltung des Fernsehgeräts zur Folge haben soll, ist von Fall zu Fall von dem Betreiber des gesamten Systmes zu entscheiden.

## Patentansprüche

1. Bett-Bediengerät für Ruf- und Sprechanlagen in Krankenhäusern und Pflegeheimen, mit einer an einer Schwesternrufanlage angeschlossenen Ruftaste, mit einer Einrichtung zur Lautstärkeeinstellung eines Kopfhörers, mit einer Tonleitungsauswahleinrichtung, durch welche die Anschaltung jeweils einer von einer Vielzahl von Tonleitungen an den an dem Bett-Bediengerät angeschlossenen Kopfhörer steuerbar ist, das Bett-Bediengerät an einem , an einem Tisch befestigten schwenkbaren starren Bügel angebracht ist, eine Halterung für einen, an dem Bett-Bediengerät angeschlossenen Fernsprechapparat in Form eines Handapparates mit eingebauter Wähltastatur vorgesehen ist, und über die Tonleitungsauswahleinrichtung der Kopfhörer mit einer Fernsteuereinrichtung verbindbar ist, welche den Kopfhörerausgang eines im Raum des Bett-Bediengeräts befindlichen Fernsehgeräts aufgrund von Steuerbefehlen durchschaltet, die in der mit einer zentralen Erfassungs- und Steuereinrichtung verbundenen oder verbindbaren Fernsteuereinrichtung auslösbar sind,
**dadurch gekennzeichnet,**
daß das Bett-Bediengerät einen Kartenleser (KL) aufweist, welcher mit einer Steuereinrichtung (ST) in der Fernsteuereinrichtung (FS) verbunden ist, wobei in Abhängigkeit von den auf der in dem Kartenleser (KL) eingeführten Karte (K) eingespeicherten Informationen eine Freigabe der Benutzung des Fernsehgeräts und/oder des Fernsprechapaprates (F) erfolgt.

2. Bett-Bediengerät nach Anspruch 1,
**dadurch gekennzeichnet,**
daß das Bett-Bediengerät eine Ein/Ausschaltetaste (T2) aufweist, welche mit der Fernsteuereinrichtung (FS) verbunden ist und zur Einleitung bzw. Beendigung der Benutzung des Fernsehgeräts dient.

3. Bett-Bediengerät nach Anspruch 2,
**dadurch gekennzeichnet,**
daß das Bett-Bediengerät (BG) eine oder zwei Fortschaltetasten (T3, T4) aufweist, welche mit der Fernsteuereinrichtung (FS) verbunden sind und als Fortschaltetaste bzw. als Vorwärtsschaltetaste (T3) bzw. als Rückwärtsschaltetaste (T4) zur Kanalauswahl des Fernsehgeräts ausgebildet ist bzw. sind.

4. Bett-Bediengerät nach einem der Ansprüche 1 bis 3,
**dadurch gekennzeichnet,**
daß eine durch die Fernsteuereinrichtung (FS) steuerbare Anzeigevorrichtung (D9 bis D11) vorgesehen ist.

5. Bett-Bediengerät nach einem der Ansprüche 1 bis 4,
**dadurch gekennzeichnet,**
daß Kartenleser (KL), Anzeigevorrichtung (D9 bis D11) die Ein/Aussschaltetaste (T2) und die Fortschaltetasten (T3, T4) in einem gemeinsamen Gehäuse (BG) untergebracht sind.

6. Bett-Bediengerät nach einem der Ansprüche 1 bis 5,
**dadurch gekennzeichnet,**
daß eine Aus/Einschaltetaste (T1) vorgesehen ist, welche mit der Fernsteuereinrichtung (FS) verbunden ist und zur Steuerung der Anschaltung einer Tonleitung (TL) an den Kopfhörer (KH) dient.

7. Bett-Bediengerät nach einem der Ansprüche 3, 4 oder 6,
**dadurch gekennzeichnet,**
daß ein oder zwei Fortschaltetasten (T3, T4) vorgesehen sind, welche mit der Fernsteuereinrichtung (FS) verbunden sind und zur Steuerung der Anschaltung des Kopfhörers (KH) an eine von mehreren Tonleitungen (TL1 bis TLn) dient.

8. Bett-Bediengerät nach einem der Ansprüche 1 bis 7,
**dadurch gekennzeichnet,**
daß die Anschaltung einer Tonleitung (TL1 bis TLm, FT) an den Kopfhörer (KH) in der Fernsteuereinrichtung (FS) erfolgt und die jeweilige angeschaltete Tonleitung am Bett-Bediengerät (BG) durch eine Anzeigevorrichtung (D1, D3 bis D8) angezeigt wird.

9. Bett-Bediengerät nach einem der Ansprüche 1 bis 8,
**dadurch gekennzeichnet,**
daß eine von der Fernsteuereinrichtung (FS) gesteuerte Anzeigevorrichtung (D9 bis D11) vorgesehen ist, welche zur Anzeige eines Guthabens dient, dessen Informationen entweder auf der Karte (K) selbst oder in der Fernsteuereinrichtung (FS) und/oder in der zentralen Erfassungs- und Steuereinrichtung eingespeichert ist.

10. Bett-Bediengerät nach einem der Ansprüche 1 bis 9,
**dadurch gekennzeichnet,**
daß die Tasten (T1 bis T6) und ein Kontakt (TK) des Kartenlesers (KL) an einem ersten Schnittstellenbaustein (SB1), die Anzeigevorrichtungen (D1 bis D11, L) an einem zweiten (SB2) bzw. dritten (SB3) Schnittstellenbaustein und der Kartenleser (KL) an einem gemeinsamen Bus-System (B) angeschlossen sind, welches mit der Fernsteuereinrichtung (FS) verbunden ist.

11. Bett-Bediengerät nach einem der Ansprüche 1 bis 10,
**dadurch gekennzeichnet,**
daß die Betätigung der Tasten (T1 bis T6) und des Kontakts (KT) des Kartenlesers (KL) durch die Steuereinrichtung (ST) der Fernsteuereinrichtung (FS) verarbeitet wird und die Steuerung der Anzeigevorrichtungen (D1 bis D11, L) durch diese Steuereinrichtung (ST) erfolgt.

12. Bett-Bediengerät nach einem der Ansprüche 1 bis 11,
**dadurch gekennzeichnet,**
daß aufgrund von Informationen der Karte (K), die von der Fernsteuereinrichtung (FS) der zentralen Erfassungs- und Steuereinrichtung übermittelt werden, ein dem Karteninhaber zugeordneter, die Information über einen Geldbetrag eines Guthabens enthaltener Speicherplatz angesteuert wird und daß in Abhängigkeit von der Höhe des Geldbetrages bzw. in Abhängigkeit von einer in diesem Speicherplatz eingespeicherten Information von der zentralen Erfassungs- und Steuereinrichtung ein Freigabesignal an die betreffende Fernsteuereinrichtung (FS) zur Benutzung des Fernsehgerät bzw. ein Freigabesignal an eine mit der zentralen Erfassungs- und Steuereinrichtung verbundenen Fernsprechvermittlungsanlage gesendet wird, an welcher der Fernsprechapparat (F) angeschlossen ist.

13. Bett-Bediengerät nach einem der Ansprüche 1 bis 11,
**dadurch gekennzeichnet,**
daß aufgrund der Informationen der Karte (K), die den Geldbetrag eines Guthabens betreffen und in der Fernsteuereinrichtung (FS) ausgewertet werden, eine zeitabhängige Benutzung des Fernsehgeräts freigegeben wird bzw. ein Freigabesignal von der Fernsteuereinrichtung (FS) über die zentrale Erfassungs- und Steuereinrichtung an die Fernsprechanlage gesendet wird.

14. Bett-Bediengerät nach Anspruch 10,
**dadurch gekennzeichnet,**
daß das Bus-System (B) am Fernsprechapparat (F) angeschlossen ist.

15. Bett-Bediengerät nach einem der Ansprüche 1 bis 14,
**dadurch gekennzeichnet,**
daß die Betätigung der Ein/Ausschaltetasten (T1 und/oder T2) nur bei im Kartenleser (KL) eingeführter Karte (K) freigegeben ist.

16. Bett-Bediengerät nach einem der Ansprüche 1 bis 15,
**dadurch gekennzeichnet,**
daß ein akustischer Signalgeber (L) vorgesehen ist, welcher von der Fernsteuereinrichtung (FS) steuerbar ist.

17. Bett-Bediengerät nach Anspruch 10,
**dadurch gekennzeichnet,**
daß am Bus-System (B) eine Steuereinrichtung mit einem Speicher angeschlossen ist.

18. Bett-Bediengerät nach Anspruch 17
**dadurch gekennzeichnet,**
daß die Steuereinrichtung eine Schnittstelle zum Anschluß der Fernsteuereinrichtung (FS) bildet.
